# EUROPEAN PATENT SPECIFICATION

(11) **EP 3 970 823 B1**
(45) Date of publication and mention of the grant of the patent: **05.08.2026**
(21) Application number: 20806693.6
(22) Date of filing: 09.04.2020
(51) Int. Cl.: B01D 17/00, B01D 17/022, B01D 17/04, B01D 61/00, B01D 17/02, B01D 61/14, B01D 61/22

(54) **MEMBRANE-BASED CONTINUOUS PHASE SEPARATION SYSTEM AND DEVICE SUITABLE FOR LOW FLOW RATES**
MEMBRANBASIERTES KONTINUIERLICHES PHASENTRENNUNGSSYSTEM UND FÜR NIEDRIGE DURCHFLUSSRATEN GEEIGNETE VORRICHTUNG
SYSTÈME DE SÉPARATION DE PHASE CONTINUE À BASE DE MEMBRANE ET DISPOSITIF APPROPRIÉ POUR DES DÉBITS FAIBLES

(30) Priority: 16.05.2019 JP 2019092519
(43) Date of publication of application: 23.03.2022
(73) Proprietor: Nisso Engineering Co., Ltd., Tokyo, 101-0051 (JP)
(72) Inventor: KAJITA, Satoshi, Tokyo 101-0051 (JP)
(74) Representative: Ipsilon
(86) International application number: PCT/JP2020/015995
(87) International publication number: WO 2020/230492

(56) References cited:
- EP-A1- 1 674 141
- JP-A- 2014 526 957
- JP-A- 2017 100 067
- JP-A- 2019 018 192
- US-A- 5 173 190
- US-A- 5 227 071
- US-A1- 2004 079 706
- US-A1- 2009 183 871
- US-A1- 2015 136 606

## Description

### TECHNICAL FIELD

The present invention relates to a continuous liquid separation apparatus and a continuous liquid separation method. More specifically, the present invention relates to an apparatus and a method for continuously demulsifying an emulsion and separating liquids by membrane separation.

### BACKGROUND ART

Various devices for separating an oil-water two-phase liquid into an oil phase and an aqueous phase are known.

For example, Patent Document 1 discloses an oil-water separator characterized in that the separator comprises a demulsification section configured that fine oil droplets dispersed in an oil-water turbid solution comprising an oil component and water are coarse-grained and the oil component is floated in a layer above the water, an oil-water separation section configured that a mixed solution containing the oil component coarse-grained in the demulsification section is separated by an oil-water separation filter comprising a hydrophilic - oleophobic oil-water separating material formed on a base material, and a transfer section configured for transferring the mixed solution toward the oil-water separation section from the demulsification section, wherein the oil-water separating material comprises a fluorine compound having an oleophobic imparting group and a hydrophilic imparting group.

Patent Document 2 discloses a physicochemical emulsified hydrocarbon / water separation apparatus for ship bilge, having a structure configured for independently separating physically and / or chemically emulsified hydrocarbon and free hydrocarbon in a mixture of hydrocarbon and water, and comprising a first separation unit and a second separation unit, wherein the first separation unit is a mass separation unit comprising a coalescent plate (Facet M pack) configured to separate free hydrocarbon from the mixture of hydrocarbon and water, and the second separation unit is a separation unit having a structure for separating emulsified hydrocarbon with a suction pump which delivers the mixture of hydrocarbon and water into a tank corresponding to the mass separation unit via a conduit pipe, characterized in that the apparatus comprises (i) a demulsifying membrane separation unit comprising an orthogonal flow type demulsifying membrane wherein the demulsifying membrane separation unit is configured for making hydrocarbon droplets from emulsified droplets flowed into the membrane without need to use demulsifying chemicals to separate emulsified hydrocarbon, (ii) a collection tube configured for feeding the hydrocarbons separated in the demulsifying membrane separation unit to the mass separation unit having an upper container into which the hydrocarbons to be discharged after the treatment flow, and the suction pump configured for providing pressure required for pumping the hydrocarbons, (iii) an automatic valve that allows a fluid to pass from the mass separation unit to the demulsifying membrane separation unit and to supply the fluid from the unit to the outflow conduit pipe via the conduit pipe, and (iv) hydrocarbon discharge system equipped with an automatic valve for inflow of pressurized purified water and a phase sensor.

Patent Document 3 discloses a method for separating components, characterized in that the method comprises mixing and stirring an organic phase with an aqueous phase comprising a target component group, a first non-target component group and a second non-target component group to obtain an emulsion consisting of the aqueous phase and the organic phase having a higher concentration of the target component group than this aqueous phase, wherein the first non-target component group has a distribution coefficient of aqueous phase / organic phase larger than the target component group has, the second non-target component group has a distribution coefficient of aqueous phase / organic phase similar to the target component group has, percolating the emulsion using a hydrophobic film to sever the organic phase containing the target component group and the second non-target component group, and then recovering the target component group from the severed organic phase.

Patent Document 4 discloses a method of separating a mixture of a volatile organic liquid and water by two types of membranes, hydrophobic and hydrophilic, characterized in that the method comprises supplying the mixture to one side of the hydrophobic membrane and flowing a carrier gas to the other side of the hydrophobic membrane to perform a permeation vaporization separation as a first stage, supplying a vapor permeated through the hydrophobic membrane to one side of the hydrophilic membrane and depressurizing the other side of the hydrophilic membrane by suction to perform vapor permeation separation as a second stage, and liquefying a vapor non-permeated through the hydrophilic membrane by condense.

Patent Document 5 discloses a treatment method of oil-containing wastewater, characterized in that the method comprises passing a wastewater containing an emulsified oil through a UF membrane filtration treatment device provided with an oil-water separable UF membrane to perform UF membrane filtration treatment to obtain a UF membrane filtration treated water having a lower oil content, resting the UF membrane filtration treatment device when clouds are detected by a turbidity detection feature, wherein the turbidity detection feature is configured to perceive an effusion of the oil in an outlet pipe for UF membrane filtration treated water and comprises a combination of a sight glass and a contactless photoelectronic sensor, draining the concentrated oily water in the UF membrane filtration treatment device, washing or replacing the UF membrane, and then resuming and controlling a water flow to the UF film filtration treatment device.

### CITATION LIST

### PATENT LITERATURES

Patent Document 1 : JP 2016-064404 A
Patent Document 2 : JP 2006-175424 A
Patent Document 3 : JP H09-47294 A
Patent Document 4 : JP S62-225207 A
Patent Document 5 : JP 2019-111503 A

Another demulsification system is disclosed in US5227071A1.

### SUMMARY OF THE INVENTION

### PROBLEMS TO BE RESOLVED BY THE INVENTION

An object of the present invention is to provide a method and an apparatus for continuously performing a liquid separation by demulsification and membrane separation of an emulsion, and a method and an apparatus for continuously performing a liquid-liquid extraction using the method and apparatus for the liquid separation.

### MEANS FOR SOLVING THE PROBLEMS

As a result of studies for achieving the above object, the present invention including the following aspects has been found.
[1] A continuous liquid separation apparatus is defined in claim 1. A continuous liquid separation method is defined in claim 8. The further preferred embodiments are defined in the dependent claims.

### ADVANTAGEOUS EFFECTS OF THE INVENTION

The continuous liquid separation method and apparatus of the present invention can optimize the liquid separation conditions by demulsifying an emulsion and membrane separation. Since the continuous liquid separation method and apparatus of the present invention can accurately grasp the defects in demulsification and membrane separation, it is possible to accurately take measures against them.

### BRIEF DESCRIPTION OF THE DRAWINGS

FIG. 1 is a conceptual diagram which shows an example of the continuous liquid separation apparatus of the present invention.
FIG. 2 is a conceptual diagram which shows another example of the continuous liquid separation apparatus of the present invention.
FIG. 3 is a conceptual diagram which shows another example of the continuous liquid separation apparatus of the present invention.
FIG. 4 is a conceptual diagram which shows an example (continuous liquid-liquid contact apparatus) of an emulsion preparation device.
FIG. 5 is a conceptual diagram which shows the apparatus used in Examples 1 to 3.

### EMBODIMENTS FOR CARRYING OUT THE INVENTION

The continuous liquid separation apparatus of the present invention comprises a demulsifying device, a membrane separation device 7, instruments 11, 12, and 13 configured for measuring optical properties, a storage device, and a diagnostic device.

The continuous liquid-liquid extraction device of the present invention comprises an emulsion preparation device, a demulsifying device, a membrane separation device, instruments for measuring optical properties, a storage device, and a diagnostic device.

The emulsion comprises a combination of a hydrophilic solution and a hydrophobic solution. The emulsion may be one in which the hydrophobic liquid phase is dispersed in the matrix of the hydrophilic liquid phase, or may be one in which the hydrophilic liquid phase is dispersed in the matrix of the hydrophobic liquid phase. A size of the liquid phase (droplets) dispersed in the emulsion is not particularly limited, and is, for example, 0.1 µm to 1000 µm in terms of 50% diameter (D₅₀) in the volume based distribution. A microemulsion having a D₅₀ of 10 nm to 100 nm or a nanoemulsion having a D₅₀ of 1 nm to 10 nm can also be used in the present invention. Examples of the emulsion preparation device used in the present invention can include an emulsifier, a liquid-liquid disperser, a homogenizer, a static mixer, and a packed bed. Further, the emulsion may be produced by a continuous liquid-liquid contact apparatus described later. The emulsion discharged from the emulsion preparation device can be sent to the demulsifying device via the emulsion supply flow path 1.

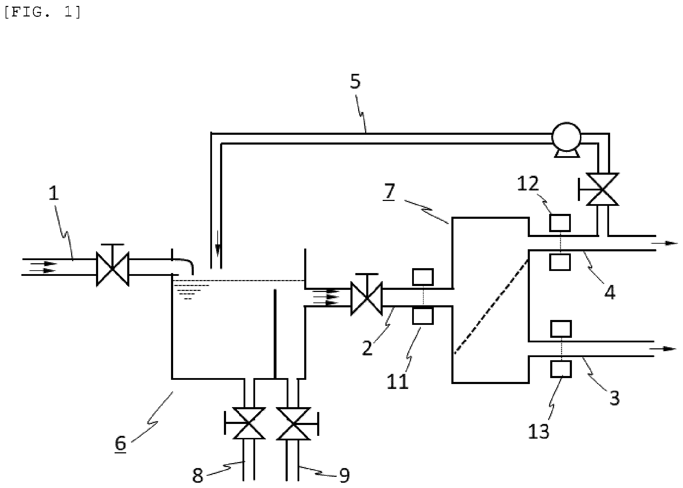

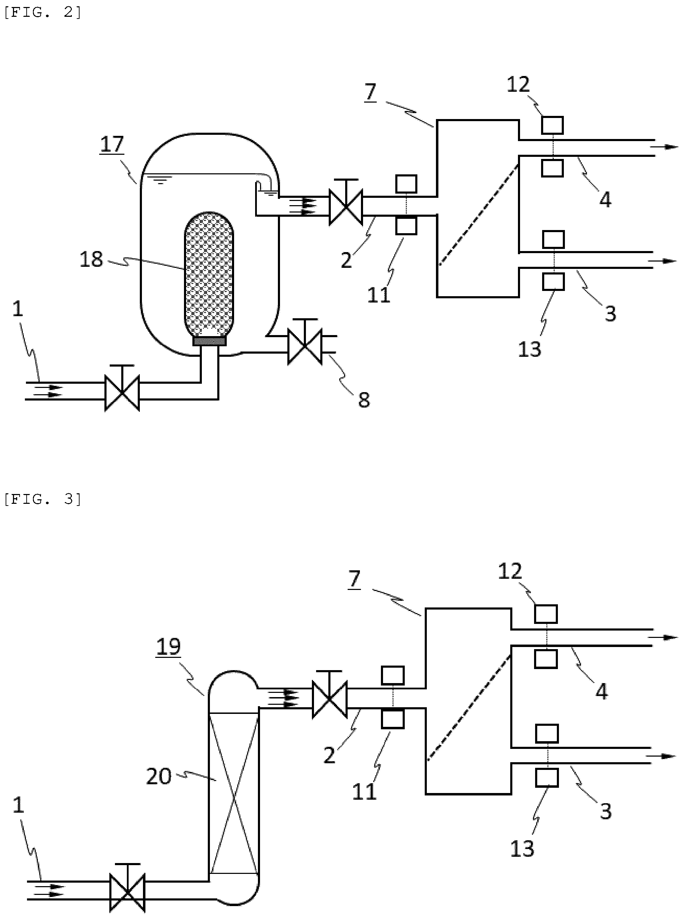

The demulsifying device is configured for demulsifying the emulsion. Demulsification is the process of actively destroying a system that is stabilized as an emulsion and shifting it to a phase-separated system. As a method of demulsification, mentioned can be, for example, a method comprising changing the temperature of an emulsion containing a surfactant, a method comprising adding a salt or the like to an emulsion to change the electric charge of dispersed droplets in the emulsion, a method comprising applying centrifugal force or shearing force to an emulsion, a method comprising passing an emulsion through a packed bed, coalescer filter, etc., a method comprising irradiating an emulsion with microwaves, a method comprising applying voltage to an emulsion, a method comprising adding an acid or a base to an emulsion to change a pH of the emulsion, a method comprising adding an demulsifying agent to an emulsion, and the like. The packed bed used for demulsification can be filled with porous particles (porous glass beads and the like), an adsorbent, a water absorbing agent, an oil absorbing agent and the like. Examples of the demulsifying agent can include an alkoxylated phenol formaldehyde resin, an alkoxylated epoxy resin, an alkoxylated polyethyleneimine, an alkoxylated polyamine, an alkoxylated diepoxide, an alkoxylated polyol, and an alkoxylated dendrimer. The demulsified liquid discharged from the demulsifying device can be sent to the membrane separation device 7 via the demulsified liquid supply flow path 2. A settler type demulsifying device 6 is installed in the continuous liquid separation apparatus shown in FIG. 1. The flow paths 8 and 9 are configured for extracting the heavy liquid of the demulsified liquid when it has settled and accumulated in the demulsifying device. A coalescer type demulsifying device 17 is installed in the continuous liquid separation apparatus shown in FIG. 2. A packed bed type demulsifying device 19 is installed in the continuous liquid separation apparatus shown in FIG. 3.

The membrane separation device can separate the demulsified liquid into a membrane permeated liquid and a membrane impermeated liquid. In the membrane separation, it is preferable to adjust the differential pressure (= membrane impermeated liquid pressure - membrane permeated liquid pressure) applied to the membrane so as to be not more than a bubbling point of the membrane.

As the membrane preferably used for the membrane separation device 7 used in the present invention, mentioned can be a membrane that easily permeates the hydrophobic liquid phase and hardly permeates the hydrophilic liquid phase, or a membrane that easily permeates the hydrophilic liquid phase and hardly permeates the hydrophobic liquid phase.

As the membrane that easily permeates the hydrophobic liquid phase and hardly permeates the hydrophilic liquid phase, mentioned can be, for instance, a lipophilic and water-repellent membrane. Examples of the lipophilic and water-repellent film can include a hydrophobic silica film, a silicone film, and a PVDF film.

As the membrane that easily permeates the hydrophilic liquid phase and hardly permeates the hydrophobic liquid phase, mentioned can be, for instance, a hydrophilic and oil-repellent membrane. Examples of the hydrophilic and oil-repellent film can include a film comprising a fluorine compound having a hydrophilicity-imparting group as described in Patent Document 1 and the like.

In the present invention, a membrane that easily permeates the hydrophobic liquid phase and does not easily permeate the hydrophilic liquid phase is preferably used.

Further, as a membrane for liquid-liquid separation, a membrane made of an organic material such as cellulose acetate, polysulfone or polyethylene or a membrane made of an inorganic material such as aluminum oxide (alumina) or zirconium oxide (zirconia) can be used as needed.

The membrane permeated liquid discharged from the membrane separation device can be sent to the outside of the system of the apparatus of the present invention via the membrane permeated liquid discharge flow path 3. The membrane impermeated liquid discharged from the membrane separation device can be sent to the outside of the system of the apparatus of the present invention via the membrane impermeated liquid discharge flow path 4, or can be sent back to the demulsifying device constituting the apparatus of the present invention via a flow path 5 to be mixed with the emulsion, and demulsified and membrane-separated again.

The instrument 11 for measuring the optical properties of the demulsified liquid, the instrument 13 for measuring the optical properties of the membrane permeated liquid, and the instrument 12 for measuring the optical properties of the membrane impermeated liquid are not limited particularly as long as the optical properties of the liquid can be measured. Examples of the optical properties of the liquid can include light transmittance, light reflectance, light scattering ratio, spectral distribution, and refractive index. A photoelectric sensor, which is one of the instruments for measuring optical properties, comprises a light emitting part and a light receiving part, wherein the light emitting part is configured to emit light such as visible light or infrared light from the light emitting part and the light receiving part is configured to detect changes in an amount of a light reflected or blocked by the object to be detected so as to obtain an output signal. The photoelectric sensor is classified into three types, a transmission type, a rotation reflection type, and a diffuse reflection type, and the transmissive type or the diffuse reflection type is preferable.

The transmissive type photoelectric sensor has a configuration in which it detects a change in an amount of transmitted light from a light emitting part incident to the light receiving part and finds out the presence / absence and state of a detected object. That is, the light emitting part and the light receiving part are arranged so as to face each other, and when the object to be detected comes between the light emitting part and the light receiving part and blocks the light, the amount of light entering the light receiving part is decreased. The decrease is caught to detect that.

The reflective type photoelectric sensor comprises a configuration that the light emitting part is installed on or near the axis of the light receiving part and an object to be detected is found by increasing or decreasing the amount of reflected light generated when the object to be detected passes or approaches in front of the light emitting part. That is, normally, the light emitting and receiving parts are integrated, and when the light emitted from the light emitting part hits the object to be detected, the light reflected from the object to be detected enters the light receiving part and the amount of received light increases. The increase is caught to detect that.

In the present invention, for example, the optical properties can be measured by installing a photoelectric sensor in each of a demulsified liquid inspection flow path, a membrane permeated liquid inspection flow path, and if necessary, a membrane impermeated liquid inspection flow path. The demulsified liquid inspection flow path, the membrane permeated liquid inspection flow path, and the membrane impermeated liquid inspection flow path can be shared with a demulsified liquid supply flow path, a membrane permeated liquid discharge flow path, and a membrane impermeated liquid discharge flow path, respectively. Alternatively, they may be provided separately from the demulsified liquid supply flow path, the membrane permeated liquid discharge flow path, and the membrane impermeated liquid discharge flow path for inspection. Each inspection flow path may be arranged horizontally, or may be arranged vertically. In a horizontal arrangement, a disperse flow, a plug flow, a slug flow, a stratified flow in which two liquid phases flow separately at the interface between the upper part and the lower part of the flow path, a wavy flow in which the interface between the two liquid phases undulates at the upper part and the lower part of the flow path, or an annular flow may occur. In vertical arrangement can result in a flow such as disperse flow, slug flow, churn flow, or annular flow.

It is preferable that the demulsified liquid inspection flow path, the membrane permeated liquid inspection flow path, and the membrane impermeated liquid inspection flow path have an inner diameter of micrometer size or millimeter size, respectively. In the present application, the micrometer size or the millimeter size refers to a size known to one skilled in the art, for example, a size of 1 µm or more and less than 1000 mm, preferably a size of 10 µm or more and 100 mm or less, and more preferably a size of 100 µm or more and 50 mm or less, further preferably a size of 0.3 mm or more and 10 mm or less, and even more preferably 0.5 mm or more and 5 mm or less. Using a micrometer-sized or millimeter-sized inspection flow path makes it possible to detect fluctuations in optical properties associated with various flows such as slug flow or the others, which was difficult when using a thick flow path.

The measured values of the optical properties of the demulsified liquid, and the measured values of the optical properties of the membrane permeated liquid, and if necessary the measured values of the optical properties of the membrane impermeated liquid, are respectively recorded in a storage device in time series. Then, the diagnostic device diagnoses the demulsifying device or the membrane separation device based on the time series record. The diagnosis result can be notified by a light, a sound, a character, a symbol, or the like by a display unit or an alarm unit.

Further, based on the diagnosis result, the setting of the device for changing the operating conditions of the demulsifying device or the membrane separation device, such as a flow rate controller, a pressure controller, a temperature controller, etc., can be changed automatically or manually. The operating conditions may be changed based on such a diagnosis result by providing an automatic control device or the like. The diagnostic device may be capable of proposing countermeasures such as disassembly, cleaning, or member replacement for each device. The member here refers to a filler such as glass beads, a membrane for separation, a sealing material, an O-ring, a valve, and the like, but is not limited to these examples.

In one aspect of the diagnosis of the demulsifying device, it is determined whether or not the desired demulsification is performed.

The emulsion is a dispersion of minute liquid droplets. The light passing through the emulsion causes reflection, refraction, etc. at the interface of the droplets dispersed in the emulsion. Since the number of droplets dispersed in the emulsion flowing through the inspection flow path is large, the optical properties are detected as the integrated value of reflection and refraction caused by a large number of droplets. Therefore, the measured values in time series of the optical properties of the emulsion flowing through the inspection flow path tend to have a small range, a small variance coefficient or a small standard deviation. The variance coefficient is the standard deviation divided by the arithmetic mean. The range is the difference between the maximum and minimum values. The arithmetic mean (simple moving average) of the measured values in the time series of the light transmittance of the emulsion flowing through the inspection flow path is generally lower than that of the uniform liquid due to turbidity.

On the other hand, the droplets dispersed in the demulsified liquid are larger in size than those in the emulsion and smaller in quantity than those in the emulsion. In the demulsified liquid flowing through the inspection path, particularly the micrometer-sized or millimeter-sized inspection path, the hydrophobic liquid phase and the hydrophilic liquid phase tend to flow alternately. Such flow is called a slug flow or a plug flow. In the slug flow state, the measured values of the optical properties of the liquid over time tend to have a large variance coefficient or a large standard deviation. The degree of demulsification in the demulsifying device can be estimated from, for example, an altitude of variance coefficient or standard deviation of the measured value in the time series of the optical properties of the demulsified liquid flowing through the demulsified liquid inspection flow path. That is, it can be inferred that the larger the variance coefficient or the standard deviation is, the more the demulsification progresses. The arithmetic mean of the measured values of the light transmittance of the demulsified liquid flowing through the inspection flow path in time series usually tends to be higher than that of the emulsion because the turbidity is reduced by the demulsification. Further, in the slug flow state, the hydrophobic liquid phase and the hydrophilic liquid phase flow alternately. Using the difference in optical properties between the hydrophobic liquid phase and the hydrophilic liquid phase, an average time during which the hydrophobic liquid phase is flowing and an average time during which the hydrophilic liquid phase is flowing can be measured to estimate a proportion of the hydrophobic liquid phase and the hydrophilic liquid phase.

In one aspect of the diagnosis of the membrane separation device, for example, it is determined whether or not the degree of blocking of permeation of the impermeated liquid by the membrane is appropriate.

The membrane permeated liquid discharged from the membrane separation device having a membrane that easily permeates the hydrophobic liquid phase and hardly permeates the hydrophilic liquid phase mainly contains the hydrophobic liquid phase. The lower the permeation blocking ratio of the hydrophilic liquid phase is, the more hydrophilic liquid phase is contained in the membrane permeated liquid. The smaller the amount of the hydrophilic liquid phase is contained in the membrane permeated liquid, the higher the permeation blocking ratio of the hydrophilic liquid phase. In the membrane permeated liquid obtained with a low permeation blocking ratio, the hydrophilic liquid phase is dispersed as droplets in the matrix of the hydrophobic liquid phase. When the amount of the hydrophilic liquid phase contained in the membrane permeated liquid flowing through the flow path, particularly the micrometer-sized or millimeter-sized inspection flow path, increases, a slug flow state is likely to occur. In the slug flow state, the measured values of the optical properties of the liquid in time series tend to have a large variance coefficient or a large standard deviation.

On the other hand, the membrane permeated liquid discharged from the membrane separation device having a membrane that easily permeates the hydrophilic liquid phase and hardly permeates the hydrophobic liquid phase mainly contains the hydrophilic liquid phase. The lower the permeation blocking ratio of the hydrophobic liquid phase is, the more hydrophobic liquid phase is contained in the membrane permeated liquid. The smaller the amount of the hydrophobic liquid phase contained in the membrane permeated liquid, the higher the permeation blocking ratio of the hydrophobic liquid phase. In the membrane permeated liquid obtained with a low permeation blocking ratio, the hydrophobic liquid phase is dispersed as droplets in the matrix of the hydrophilic liquid phase. When the amount of the hydrophobic liquid phase contained in the membrane permeated liquid flowing through the flow path, particularly the micrometer-sized or millimeter-sized inspection flow path, increases, a slug flow state is likely to occur. In the slug flow state, the measured values of the optical properties of the liquid in time series tend to have a large variance coefficient or a large standard deviation.

As described above, the permeation blocking ratio in the membrane separation device can be estimated, for example, by the variance coefficient or standard deviation of the measured value in the time series of the optical properties of the membrane permeated liquid flowing through the membrane permeated liquid inspection flow path. That is, the larger the variance coefficient or standard deviation is, the lower the permeation blocking ratio is. Further, in the slug flow state, the hydrophobic liquid phase and the hydrophilic liquid phase flow alternately, so that the average time during which the hydrophobic liquid phase is flowing and the average time during which the hydrophilic liquid phase is flowing can be measured by utilizing the difference in optical properties between the hydrophobic liquid phase and the hydrophilic liquid phase, to estimate the ratio between the hydrophobic liquid phase and the hydrophilic liquid phase.

In another aspect of the diagnosis of the membrane separation device, for example, it is determined whether or not the degree of permeation selection of the membrane is appropriate.

The membrane impermeated liquid discharged from the membrane separation device having a membrane that easily permeates the hydrophobic liquid phase and hardly permeates the hydrophilic liquid phase has a lower proportion of the hydrophobic liquid phase than that of the demulsified liquid. The higher the permeation selectivity of the membrane is, the higher the proportion of the hydrophilic liquid phase in the membrane impermeated liquid tends to be.

On the other hand, the membrane impermeated liquid discharged from the membrane separation device having a membrane that easily permeates the hydrophilic liquid phase and hardly permeates the hydrophobic liquid phase has a lower proportion of the hydrophilic liquid phase than that of the demulsified liquid. The higher the permeation selectivity of the membrane, the higher the proportion of the hydrophobic liquid phase in the membrane impermeated liquid tends to be.

As already described, in the slug flow state, the hydrophobic liquid phase and the hydrophilic liquid phase flow alternately, the average time that the hydrophobic liquid phase is flowing and the average time that the hydrophilic liquid phase is flowing can be measured by utilizing the difference in optical properties between the hydrophobic liquid phase and the hydrophilic liquid phase to estimate the proportion of the hydrophobic liquid phase to the hydrophilic liquid phase. Therefore, the measured values of the optical properties of the membrane impermeated liquid flowing through the membrane impermeated liquid inspection flow path are recorded in time series, whereby the proportion of the hydrophobic liquid phase to the hydrophilic liquid phase in the membrane impermeated liquid can be estimated. Thereby, the degree of selective permeation of the membrane can be determined.

In addition, it is possible to estimate whether or not the function of the membrane is sufficiently exhibited from the comparison between the optical properties of the demulsified liquid and the optical properties of the membrane impermeated liquid. For example, if the difference between the optical properties of the demulsified liquid and the optical properties of the membrane impermeated liquid is small, it indicates that the flow rate of the demulsified liquid supplied to the membrane separation device may exceed the membrane separation rate or the differential pressure on the membrane may be too small.

In the continuous liquid-liquid extraction apparatus of the present invention, the emulsion preparation device preferably used is a continuous liquid-liquid contact apparatus comprising a loop tube type vessel with a circulation flow path having an inner diameter of micrometer size or millimeter size, a heterogeneous liquid supply flow path configured for continuously supplying a heterogeneous liquid composed of a combination of the hydrophilic solution and the hydrophobic solution at a flow rate of 0.01 to 500 cm³/min to the loop tube type vessel, wherein the heterogeneous liquid supply flow path is connected to the circulation flow path, a displacement pump configured for circulation flow of the supplied liquid in the circulation flow path at a flow rate that becomes turbulent in a region from a connection portion of the heterogeneous liquid supply flow path and the circulation flow path to a connection portion of an emulsion discharge flow path and the circulation flow path, and an emulsion discharge flow path 105 configured for continuously discharging the circulated liquid from the loop tube type vessel at a flow rate that satisfies the mass balance, wherein the emulsion discharge flow path is connected to the circulation flow path.

The heterogeneous liquid supply flow path 101 is a portion from a container for storing at least two kinds of liquids to the loop tube type vessel. The inner diameter of the heterogeneous liquid supply flow path 101 is not particularly limited, but is preferably micrometer-sized or millimeter-sized.

In the heterogeneous liquid supply flow path 101, provided can be a pump, an adsorption device, a dehydrator, a degassing device, a filter (filter cloth), a stirrer, a liquid preparation device, a temperature controller, a cooler, and a heater, if necessary. As the stirring device, a static mixing device (also referred to as a static mixer) is preferably used.

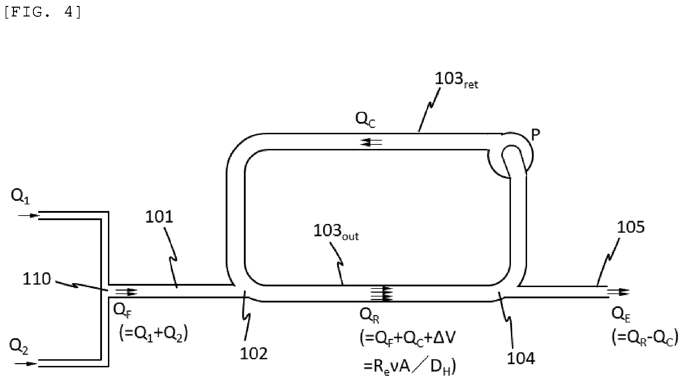

In the apparatus shown in FIG. 4, a first liquid is supplied from a first storage container (not shown) at the flow rate Q₁, and a second liquid is supplied from a second storage container (not shown) at the flow rate Q₂. The first liquid and the second liquid are combined at the confluence portion 110 and flow into the circulation flow path at the connection portion 102 at the flow rate Q_{F}. In order to promote the mixing of the two liquids, the confluence portion 110 and the connection portion 102 may be provided with a mixer such as a microreactor or a millireactor, or may be provided with a device such as an ejector. The ejector is a device that can suck in a low-pressure fluid (liquid or gas) by using the force of a high-pressure fluid and discharge it at a medium pressure. If the volume does not change with mixing, the flow rate Q_{F} is the sum of the flow rate Q₁ and the flow rate Q₂.

The liquid preparation device is configured for combining at least two kinds of raw material liquids to obtain a homogeneous liquid or a heterogeneous liquid consisting of at least two kinds of liquids.

The liquid preparation device may be a simple confluence (for example, Tee) 110, or may be a mixer such as a millimeter-sized reactor (for example, "Millireactor" manufactured by Nisso Engineering Co., Ltd.), or may be a device such as an emulsifier or a disperser.

The loop tube type reactor comprises a circulation flow path. The circulation flow path is a loop type flow path which starts from the connection portion 102 which is a portion connected to the heterogeneous liquid supply flow path 101, passes through the connection part 104 which is a portion connected to the discharge flow path 105, and returns to the connection portion 102 again. In the present application, for the sake of brevity, the section from the connection portion 102 to the connection portion 104 is referred to as an outward flow path 103ₒᵤₜ, and the section from the connection portion 104 to the connection portion 102 is referred to as a return flow path 103ᵣₑₜ. The entire loop-type flow path is called a circulation flow path. In the circulation flow path, the inner diameter of at least the outward flow path 3ₒᵤₜ is preferably micrometer-sized or millimeter-sized, and it is more preferable that the inner diameters of both the outward flow path 3ₒᵤₜ and the return flow path 3ᵣₑₜ are micrometer-sized or millimeter-sized.

If necessary, the circulation flow path may be provided with a pump, a filter (filter cloth, etc.), a stirrer, a temperature controller, a cooler, a heater, and the like. The pump is preferably provided in the return flow path 103ᵣₑₜ. The pump P is preferably a displacement pump because it can flow a liquid at an accurate flow rate. Examples of the displacement pump can include reciprocating pumps such as piston pumps, plunger pumps and diaphragm pumps, and rotary pumps such as gear pumps, vane pumps and screw pumps. Of these, the plunger pump is preferable because it can handle a minute flow rate. The displacement pump makes turbulent in the flow state of the outward flow path.

The stirring device is preferably provided in the outward flow path 103ₒᵤₜ. As the stirring device, a static mixing device is preferably used. At the connection portion 102 between the heterogeneous liquid supply flow path 101 and the circulation flow path, an ejector or the like can be provided in order to promote mixing of the liquid from the heterogeneous liquid supply flow path 101 and the liquid from the return flow path 103ᵣₑₜ, or a mixer such as a millimeter-sized reactor (for example, "Millireactor" manufactured by Nisso Engineering Co., Ltd.) may be provided.

Further, the filling material can be packed in the circulation flow path, preferably in the outward flow path 103ₒᵤₜ. The filling material can facilitate mixing. The filling material may be one that does not contribute to the chemical reaction, or may be one that contributes to the chemical reaction. Examples of those that contribute to the chemical reaction can include catalysts and adsorbents. The shape of the filling material is not particularly limited, and examples thereof can include a granular shape, a needle shape, a plate shape, a coil shape, and a ring shape. The liquid flow rate Q_{R} in the outward flow path 103ₒᵤₜ is the sum of the liquid flow rate Q_{F} from the supply flow path, the liquid flow rate Q_{c} from the return flow path 103ᵣₑₜ, and a volume change ΔV due to a chemical reaction or the like.

The emulsion discharge flow path 105 is a flow path from the connection portion 104 to the outside of the system of the continuous liquid-liquid contact apparatus, and is connected to the emulsion supply flow path 1 in the demulsifying device. If necessary, the emulsion discharge flow path 105 may be provided with a pump, a gas-liquid separator, a filter (filter cloth), a stirrer, a temperature controller, a cooler, a heater, a damper, and the like. The inner diameter of the emulsion discharge flow path 105 is not particularly limited, but is preferably micrometer sized or millimeter sized.

The liquid flow rate Q_{E} in the emulsion discharge flow path is obtained by subtracting the liquid flow rate Q_{c} in the return flow path from the liquid flow rate Q_{R} in the outward flow path. The damper can be appropriately used to suppress the pulsation generated by the reciprocating pump.

In the apparatus shown in FIG. 4, the circulation flow path, the supply flow path 101, and the discharge flow path 105 are generally straight flow paths, but may be coil-shaped or zigzag-shaped flow paths.

In one embodiment of the present invention, the flow rate Q_{F} of the liquid in the heterogeneous liquid supply flow path is determined by the supply amount of at least two kinds of liquids supplied from the storage container, and the state of the flow may be a laminar flow or a turbulent flow. The laminar flow means a flow in which the fluid moves regularly, and in a straight pipe having a circular cross section, the flow line of the fluid is always parallel to the pipe axis.

In one embodiment of the present invention, the flow rate Q_{R} of the liquid in the outward flow path is a range in which the flow of the liquid in the outward flow path becomes turbulent flow. Turbulent flow refers to a flow in which the velocity or pressure of a fluid fluctuates irregularly. Liquid-liquid contact is promoted by setting the flow rate to be turbulent flow.

In a preferred embodiment of the present invention, the flow rate Q_{F} of the liquid in the supply flow path 101 is set to usually 0.01 to 500 cm³ / min, more preferably 0.1 to 100 cm³ / min, and even more preferably 1 to 50 cm³ / min. Further, in a preferred embodiment of the present invention, the flow rate Q_{R} of the liquid in the outward flow path 103ₒᵤₜ is set to the flow rate (m³ / sec) calculated by Rₑ × ν × A / D_{H}, wherein Re is 1000 or more, preferably 1300 or more, more preferably 1800 or more, ν (m² / sec) is the kinematic viscosity coefficient of the circulated liquid, A (m₂) is a square measure of the cross section of the outward flow path 103ₒᵤₜ , D_{H} (m) is a length calculated by 4 × A / P, and P (m) is the peripheral length of the cross section of the outward flow path 103ₒᵤₜ.

The liquid flow rate Q_{E} in the emulsion discharge flow path 105 is a flow rate that satisfies the mass balance. The average residence time in the loop tube type reactor is a value obtained by dividing the capacity of the circulation flow path by the flow rate Q_{F} or Q_{E}. Rₑ is a dimensionless number called a Reynolds number in the field of chemical engineering, and is a value defined by Rₑ = (D_{H} × Q_{R}) / (ν × A). The larger the Reynolds number is, the more turbulent the flow tends to be.

### (Example)

Next, examples will be shown to clarify the usefulness of the present invention.

### (Example 1)

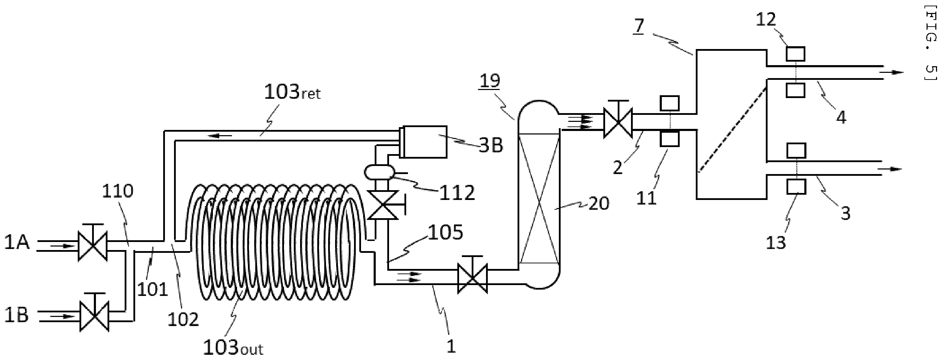

An experiment was conducted using the continuous liquid-liquid extraction apparatus shown in FIG. 5.

A circulation flow path having a capacity of 20 ml was prepared, wherein the circulation flow path was composed of a spiral-shaped outward flow path 103ₒᵤₜ consisting of a 1/8 inch tube (outer diameter 3.18 mm, inner diameter 2.17 mm) and a spiral diameter of 200 mm, and a return flow path 103ᵣₑₜ consisting of a 1/8 inch tube.

To the return flow path 103ᵣₑₜ, a circulation pump 3B (double plunger pump manufactured by Nippon Precision Science Co., Ltd., NP-HX-200, maximum discharge pressure 10 MPa), and a pulsation attenuation damper 112 (1/2 inch-PFA tube (Inner diameter 9 mm)) were installed.

The supply flow path 101 was connected to the connection portion 102 between the inlet of the outward flow path 103ₒᵤₜ and the outlet of the return flow path 103ᵣₑₜ.

The discharge flow path 105 was connected to the connection portion 104 between the outlet of the outward flow path 103ₒᵤₜ and the inlet of the return flow path 103ᵣₑₜ.

Although not shown, a back pressure regulator (nitrogen gas pressurization, inert gas seal pressure control automatic valve) was installed to the membrane permeated liquid discharge flow path 3 and the membrane impermeated liquid discharge flow path 4 respectively.

The emulsion supply flow path 1 was connected to beyond the discharge flow path 105, and a demulsifying device 19 and a membrane separation device 7 were installed beyond the emulsion supply flow path 1, wherein the demulsifying device 19 comprising a packed bed 20 formed of a cylinder (capacity 1.4 ml) having an inner diameter of 6.0 mm and a height of 50 mm and filled with glass beads having a diameter of 0.3 to 0.5 mm and the membrane separation device with a spiral flow path comprising a hydrophobic PVDF membrane with a diameter of 47 mm (Durapore GVHP) having an effective filtration area of 6 cm². A demulsified liquid supply flow path 2, a membrane permeated liquid discharge flow path 3, and a membrane impermeated liquid discharge flow path 4, which are composed of a PFA tube having an outer diameter of 3.18 mm and an inner diameter of 1.5 mm, were connected to them. The differential pressure applied to the hydrophobic PVDF membrane was set to 89 kPa. The hydrophobic PVDF membrane was a lipophilic and water-repellence membrane. To the demulsified liquid supply flow path 2, the membrane permeated liquid discharge flow path 3, and the membrane impermeated liquid discharge flow path 4, a photoelectric sensor (manufactured by OMRON, E3NX-FA11AN / E32-T11R, emission wavelength 625 nm, output 1 to 5 V) 11, 12 and 13 were installed respectively.

A toluene solution 1A of 2.70 mass% acetic acid and an aqueous solution 1B of 2.91 mass% 4-methoxyphenol sodium salt were continuously supplied at 4.9 ml / min using supply pumps (pulseless flow plunger pump, Nippon Precision Science Co., Ltd., NP-KX-500, maximum discharge pressure of 35 MPa) to the circulation flow path via the supply flow path 101 respectively. Although not shown, a millimeter-sized mixer ("Millireactor" manufactured by Nisso Engineering Co., Ltd.) was installed at the confluence portion 110 and the connection portion 102, respectively. A part of the liquid that passed through the outward flow path 103ₒᵤₜ was continuously discharged at 9.8 ml / min through the emulsion discharge flow path 105. Using the circulation pump 3B, the rest of the liquid that passed through the outward flow path 103ₒᵤₜ was continuously supplied to the inlet of the outward flow path 103ₒᵤₜ via the return flow path 103ᵣₑₜ at 150 ml / min.

Toluene seems to dissolve in water at about 0.5 g / L (25 °C). Water seems to dissolve about 0.94 mg in toluene. Acetic acid seems to be easily soluble in water. 4-methoxyphenol seems to dissolve in water at about 40 g / L (25 °C).

When the 4-methoxyphenol sodium salt in the aqueous solution and the acetic acid in the toluene solution came into liquid-liquid contact, the following chemical reactions proceeded to produce 4-methoxyphenol and sodium acetate.

NaOC₆H₄OCH₃ + CH₃COOH → HOC₆H₄OCH₃ + CH₃COONa

Since 4-methoxyphenol is easily dissolved in toluene and sodium acetate is easily dissolved in water, the sodium acetate produced transferred from the toluene phase to the aqueous phase, and the produced 4-methoxyphenol transferred from the aqueous phase to the toluene phase.

At 30, 60, and 90 minutes after the start of operation, 4-methoxyphenol in the membrane permeated liquid and the membrane impermeated liquid discharged from the membrane separation device 7 was quantified by the internal standard method of the gas chromatogram, respectively. The extraction ratios were 53.1% (after 30 minutes), 66.8% (after 60 minutes), and 67.9% (after 90 minutes). The reaction ratio was almost the same throughout the operation, averaging 94.5%. The phase separation ratio in the membrane separation device 7 was almost the same throughout the operation, and was 90%.

The extraction ratio is a value calculated by the formula: extraction ratio = (Qₐ) / (Q_{1B}) × 100. The reaction ratio is a value calculated by the formula: reaction ratio = (Q_{b} + Qₐ) / (Q_{1B}) × 100.
Q_{b} = Mass flow rate of 4-methoxyphenol in the discharged membrane impermeated liquid,
Qₐ = Mass flow rate of 4-methoxyphenol in the discharged membrane permeated liquid,
Q_{1B} = Mass flow rate in terms of 4-methoxyphenol in the supplied aqueous solution 1B of 4-methoxyphenol sodium salt.

The phase separation ratio is a value calculated by the formula: phase separation ratio = (Qt) / (Q_{1A}) × 100.
Qt = mass flow rate of toluene in the discharged membrane permeated liquid,
Q_{1A} = Mass flow rate of toluene in the supplied toluene solution 1A of acetic acid.

In addition, by visual evaluation throughout the operation, the demulsified liquid flowing through the demulsified liquid supply flow path 2 had a heterogeneous phase slug flow, the membrane permeated liquid flowing through the membrane permeated liquid discharge flow path 3 had a homogeneous phase flow, and the membrane impermeated liquid flowing through the membrane impermeated liquid discharge flow path 4 had a homogeneous phase flow.

Further, throughout the operation, the 10-second simple moving average of the output value range for the light transmittance measured by the photoelectric sensor was 0.064 V in the demulsified liquid flowing through the demulsified liquid supply flow path, 0.005 V in the membrane permeated liquid flowing through the membrane permeated liquid discharge flow path, and 0.03 V in the membrane impermeated liquid flowing through the membrane impermeted liquid discharge flow path.

### In this example,

when the 10-second simple moving average of the output value range related to light transmittance in the demulsified liquid was 0.030 V (range equivalent to the membrane impermeaed liquid) or more, it was diagnosed as normal, and when it was less than 0.030 V, it was diagnosed as abnormal.

The abnormal diagnosis of the demulsified liquid presumes that the demulsified liquid is in a state of a homogeneous phase liquid or an emulsion, and the degree of demulsification in the demulsifying device decreases in general.

As measures to increase the degree of demulsification, suggested can be reducing the amount of emulsion supplied to the demulsifying device, increasing the amount of demulsifying agent added if the demulsifying device uses the demulsifying agent or the others. If these measures do not improve it, it is presumed that the demulsifying device itself has failed.

When the 10-second simple moving average of the output value range related to the light transmittance in the membrane permeated liquid was less than 0.005 + α V, it was diagnosed as normal, and when it was 0.005 + α V or more, it was diagnosed as abnormal. The abnormal diagnosis of the membrane permeated liquid presumes that the aqueous phase may have permeated through the membrane and mixed into the membrane permeated liquid (toluene phase).

As measures in this case, suggested can be reducing the differential pressure applied to the hydrophobic PVDF membrane, specifically, increasing the sealing pressure by an inert gas such as nitrogen in the permeated liquid back pressure regulator, or decreasing the sealing pressure by an inert gas such as nitrogen in the impermeated liquid back pressure regulator. Alternatively, it is conceivable to reduce the amount of the demulsified liquid supplied to the membrane separation device 7, or reduce the amount of the aqueous solution 1B of 4-methoxyphenol sodium salt supplied. If these measures do not improve it, it is presumed that the membrane separation device itself has failed.

When the 10-second simple moving average of the output value range related to the light transmittance in the membrane impermeated liquid was less than 0.03 + α V, it was diagnosed as normal, and when it was 0.03 + α V or more, it was diagnosed as abnormal. The abnormal diagnosis of the membrane impermeated liquid presumes that the desired amount of the membrane permeated liquid (toluene phase) may not have permeated the membrane. As measures in this case, suggested can be increasing the differential pressure applied to the hydrophobic PVDF membrane, specifically, increasing the sealing pressure by an inert gas such as nitrogen in the impermeated liquid back pressure regulator, or decreasing the sealing pressure by an inert gas such as nitrogen in the permeated liquid back pressure regulator. Alternatively, it is conceivable to increase the amount of the demulsified liquid supplied to the membrane separation device, or reduce the amount of the toluene solution 1A of acetic acid supplied. If these measures do not improve it, it is presumed that the membrane separation device itself has failed.

### CODE DESCRIPTION

- 1 :: emulsion supply flow path
- 2 :: demulsified liquid supply flow path
- 3 :: membrane permeated liquid discharge flow path
- 4 :: membrane impermeated liquid discharge flow path
- 6 :: settler type demulsification device
- 7 :: membrane separation device
- 11 :: photoelectronic sensor for demulsified liquid inspection
- 12 :: photoelectronic sensor for membrane impermeated liquid inspection
- 13 :: photoelectronic sensor for membrane permeated liquid inspection
- 17 :: corelesser type demulsification device
- 18 :: corelesser filter
- 19 :: packed bed type demulsification device
- 20 :: packed bed

## Claims

1. A continuous liquid separation apparatus, comprising a demulsifying device configured for demulsifying an emulsion composed of a hydrophilic liquid phase and a hydrophobic liquid phase,
a demulsified liquid supply flow path configured for supplying a demulsified liquid discharged from the demulsifying device to a membrane separation device, the membrane separation device configured for separating the demulsified liquid into a membrane permeated liquid and a membrane impermeated liquid,
a membrane permeated liquid discharge flow path configured for discharging the membrane permeated liquid from the membrane separation device,
a membrane impermeated liquid discharge flow path configured for discharging the membrane impermeated liquid from the membrane separation device,
an instrument configured for measuring optical properties of the demulsified liquid,
an instrument configured for measuring optical properties of the membrane permeated liquid,
a storage device configured for recording measured values of the optical properties of the demulsified liquid and measured values of the optical properties of the membrane permeated liquid in time series, and a diagnostic device configured for diagnosing the demulsifying device or the membrane separation device based on a range, a variance coefficient or a standard deviation of the time series values recorded, wherein the range is a difference between the maximum and minimum values of the time series values recorded.

2. The continuous liquid separation apparatus according to claim 1, wherein the instrument configured for measuring optical properties of the demulsified liquid comprises a demulsified liquid inspection flow path having an inner diameter of micrometer size or millimeter size.

3. The continuous liquid separation apparatus according to claim 1 or 2, wherein the instrument configured for measuring optical properties of the membrane permeated liquid comprises a membrane permeated liquid inspection flow path having an inner diameter of micrometer size or millimeter size.

4. The continuous liquid separation apparatus according to any one of claims 1 to 3, further comprising
an instrument configured for measuring optical properties of the membrane impermeated liquid, wherein the storage device is further configured for recording of measured values of the optical properties of the membrane impermeated liquid in time series.

5. The continuous liquid separation apparatus according to claim 4, wherein the instrument configured for measuring optical properties of the membrane impermeated liquid comprises a membrane impermeated liquid inspection flow path having an inner diameter of micrometer size or millimeter size.

6. A continuous liquid-liquid extraction apparatus, comprising
an emulsion preparation device configured for combining a hydrophilic solution and a hydrophobic solution to obtain the emulsion composed of the hydrophilic liquid phase and the hydrophobic liquid phase, and
the continuous liquid separation apparatus described in any one of claims 1 to 5.

7. The continuous liquid-liquid extraction apparatus according to claim 6, wherein
the emulsion preparation device is a continuous liquid-liquid contact apparatus comprising
a loop tube type vessel with a circulation flow path having an inner diameter of micrometer size or millimeter size,
a heterogeneous liquid supply flow path configured for continuously supplying a heterogeneous liquid composed of a combination of the hydrophilic solution and the hydrophobic solution at a flow rate of 0.01 to 500 cm³/min to the loop tube type vessel, wherein the heterogeneous liquid supply flow path is connected to the circulation flow path,
a displacement pump configured for flowing the supplied liquid in the circulation flow path at a flow rate so as to be turbulent condition in a region from a connection portion of the heterogeneous liquid supply flow path and the circulation flow path to a connection portion of an emulsion discharge flow path and the circulation flow path, and
an emulsion discharge flow path configured for continuously discharging the circulated liquid from the loop tube type vessel at a flow rate that satisfies the mass balance, wherein the emulsion discharge flow path is connected to the circulation flow path.

8. A continuous liquid separation method, comprising
demulsifying an emulsion composed of a hydrophilic liquid phase and a hydrophobic liquid phase to obtain a demulsified liquid,
measuring optical properties of the demulsified liquid flowed in a demulsified liquid inspection flow path,
separating the demulsified liquid into a membrane permeated liquid and a membrane impermeated liquid using a membrane,
measuring optical properties of the membrane permeated liquid flowed in a membrane permeated liquid inspection flow path,
recording measured values of the optical properties of the demulsified liquid and measured values of the optical properties of the membrane permeated liquid in time series, and
diagnosing status of demulsification or membrane separation based on a range, a variance coefficient or a standard deviation of the time series values recorded, wherein the range is a difference between the maximum and minimum values of the time series values recorded.

9. The continuous liquid separation method according to claim 8, wherein the demulsified liquid inspection flow path has an inner diameter of micrometer size or millimeter size.

10. The continuous liquid separation method according to claim 8 or 9, wherein the membrane permeated liquid inspection flow path has an inner diameter of micrometer size or millimeter size.

11. The continuous liquid separation method according to any one of claims 8 to 10, further comprising
measuring optical properties of the membrane impermeated liquid flowed in a membrane impermeated liquid inspection flow path,
recording measured values of the optical properties of the membrane impermeated liquid in time series.

12. The continuous liquid separation method according to claim 11, wherein the membrane impermeated liquid inspection flow path has an inner diameter of micrometer size or millimeter size.

13. A continuous liquid-liquid extraction method, comprising
combining a hydrophilic solution and a hydrophobic solution to obtain an emulsion composed of the hydrophilic liquid phase and the hydrophobic liquid phase, and
performing the continuous liquid separation method described in any one of claims 8 to 12.

14. The continuous liquid-liquid extraction method according to claim 13, wherein the doing to obtain the emulsion comprises
performing a continuous liquid-liquid contacting method comprising
continuously supplying a heterogeneous liquid obtained by combining the hydrophilic solution and the hydrophobic solution to a loop tube type vessel with a circulation flow path having an inner diameter of micrometer size or millimeter size via a heterogeneous liquid supply flow path,
flowing the supplied liquid in the circulation flow path at a flow rate so as to be turbulent condition in a region from a connection portion of the heterogeneous liquid supply flow path and the circulation flow path to a connection portion of an emulsion discharge flow path and the circulation flow path, and
continuously discharging the circulated liquid from the loop tube type vessel through the emulsion discharge flow path at a flow rate that satisfies the mass balance.

## Patentansprüche

1. Kontinuierliche Flüssigkeitstrennvorrichtung umfassend
eine Demulgiervorrichtung, gestaltet zum Demulgieren einer Emulsion, die aus einer hydrophilen flüssigen Phase und einer hydrophoben flüssigen Phase zusammengesetzt ist,
einen Versorgungsströmungsweg für demulgierte Flüssigkeit, gestaltet zum Zuführen einer demulgierten Flüssigkeit, die von der Demulgiervorrichtung ausgegeben wird, zu einer Membrantrennvorrichtung,
wobei die Membrantrennvorrichtung zum Trennen der demulgierten Flüssigkeit in eine membranpermeierte Flüssigkeit und eine nicht membranpermeierte Flüssigkeit gestaltet ist,
einen Ausgabeströmungsweg für membranpermeierte Flüssigkeit, gestaltet zum Ausgeben der membranpermeierten Flüssigkeit aus der Membrantrennvorrichtung,
einen Ausgabeströmungsweg für nicht membranpermeierte Flüssigkeit, gestaltet zum Ausgeben der nicht membranpermeierten Flüssigkeit aus der Membrantrennvorrichtung,
ein Instrument, gestaltet zum Messen von optischen Eigenschaften der demulgierten Flüssigkeit,
ein Instrument, gestaltet zum Messen von optischen Eigenschaften der membranpermeierten Flüssigkeit,
eine Speichervorrichtung, gestaltet zum Aufzeichnen von Messwerten der optischen Eigenschaften der demulgierten Flüssigkeit und Messwerten der optischen Eigenschaften der membranpermeierten Flüssigkeit in zeitlicher Reihenfolge, und eine Diagnosevorrichtung, gestaltet zum Diagnostizieren der Demulgiervorrichtung oder der Membrantrennvorrichtung auf der Grundlage eines Bereichs, eines Varianzkoeffizienten oder einer Standardabweichung der in zeitlicher Reihenfolge aufgezeichneten Werte, wobei der Bereich eine Differenz zwischen dem maximalen und dem minimalen Wert der in zeitlicher Reihenfolge aufgezeichneten Werte ist.

2. Kontinuierliche Flüssigkeitstrennvorrichtung nach Anspruch 1, wobei das zum Messen von optischen Eigenschaften der demulgierten Flüssigkeit gestaltete Instrument einen Inspektionsströmungsweg für demulgierte Flüssigkeit mit einem Innendurchmesser von Mikrometergröße oder Millimetergröße umfasst.

3. Kontinuierliche Flüssigkeitstrennvorrichtung nach Anspruch 1 oder 2, wobei das zum Messen von optischen Eigenschaften der membranpermeierten Flüssigkeit gestaltete Instrument einen Inspektionsströmungsweg für membranpermeierte Flüssigkeit mit einem Innendurchmesser von Mikrometergröße oder Millimetergröße umfasst.

4. Kontinuierliche Flüssigkeitstrennvorrichtung nach einem der Ansprüche 1 bis 3, ferner umfassend
ein Instrument, gestaltet zum Messen von optischen Eigenschaften der nicht membranpermeierten Flüssigkeit, wobei die Speichervorrichtung ferner zum Aufzeichnen von Messwerten der optischen Eigenschaften der nicht membranpermeierten Flüssigkeit in zeitlicher Reihenfolge gestaltet ist.

5. Kontinuierliche Flüssigkeitstrennvorrichtung nach Anspruch 4, wobei das zum Messen von optischen Eigenschaften der nicht membranpermeierten Flüssigkeit gestaltete Instrument einen Inspektionsströmungsweg für nicht membranpermeierte Flüssigkeit mit einem Innendurchmesser von Mikrometergröße oder Millimetergröße umfasst.

6. Kontinuierliche Flüssig-Flüssig-Extraktionsvorrichtung umfassend
eine Emulsionsvorbereitungsvorrichtung, gestaltet zum Kombinieren einer hydrophilen Lösung und einer hydrophoben Lösung, um die Emulsion zu erhalten, die aus der hydrophilen flüssigen Phase und der hydrophoben flüssigen Phase zusammengesetzt ist, und
die kontinuierliche Flüssigkeitstrennvorrichtung nach einem der Ansprüche 1 bis 5.

7. Kontinuierliche Flüssig-Flüssig-Extraktionsvorrichtung nach Anspruch 6, wobei die Emulsionsvorbereitungsvorrichtung eine kontinuierliche Flüssigkeits-Flüssigkeits-Kontaktvorrichtung ist, umfassend
ein Gefäß vom Schlaufenrohrtyp mit einem Zirkulationsströmungsweg mit einem Innendurchmesser von Mikrometergröße oder Millimetergröße,
einen Zufuhrströmungsweg für heterogene Flüssigkeit, gestaltet zum kontinuierlichen Zuführen einer heterogenen Flüssigkeit, die aus einer Kombination der hydrophilen Lösung und der hydrophoben Lösung zusammengesetzt ist, mit einer Flussrate von 0,01 bis 500 cm³/min zu dem Gefäß vom Schlaufenrohrtyp, wobei der Zufuhrströmungsweg für heterogene Flüssigkeit mit dem Zirkulationsströmungsweg verbunden ist,
eine Verdrängerpumpe, gestaltet zum Strömen der zugeführten Flüssigkeit in dem Zirkulationsströmungsweg mit einer Flussrate, die einen turbulenten Zustand in einem Bereich von einem Verbindungsabschnitt des Zufuhrströmungsweg für heterogene Flüssigkeit und des Zirkulationsströmungswegs zu einem Verbindungsabschnitt eines Emulsionsauslass-Strömungswegs und des Zirkulationsströmungswegs ergibt, und
einen Emulsionsauslass-Strömungsweg, gestaltet zum kontinuierlichen Auslassen der zirkulierten Flüssigkeit aus dem Gefäß vom Schlaufenrohrtyp mit einer Strömungsgeschwindigkeit, die der Massenbilanz genügt, wobei der Emulsionsauslass-Strömungsweg mit dem Zirkulationsströmungsweg verbunden ist.

8. Kontinuierliches Flüssigkeitstrennverfahren umfassend
Demulgieren einer Emulsion, die aus einer hydrophilen flüssigen Phase und einer hydrophoben flüssigen Phase zusammengesetzt ist, um eine demulgierte Flüssigkeit zu erhalten,
Messen von optischen Eigenschaften der demulgierten Flüssigkeit, die in einem Inspektionsströmungsweg für demulgierte Flüssigkeit strömt,
Auftrennen der demulgierten Flüssigkeit in eine membranpermeierte Flüssigkeit und eine nicht membranpermeierte Flüssigkeit unter Verwendung einer Membran,
Messen von optischen Eigenschaften der membranpermeierten Flüssigkeit, die in einem Inspektionsströmungsweg für membranpermeierte Flüssigkeit strömt,
Aufzeichnen von Messwerten der optischen Eigenschaften der demulgierten Flüssigkeit und Messwerten der optischen Eigenschaften der membranpermeierten Flüssigkeit in zeitlicher Reihenfolge, und
Diagnostizieren des Status der Demulgierung oder Membrantrennung auf der Grundlage eines Bereichs, eines Varianzkoeffizienten oder einer Standardabweichung der in zeitlicher Reihenfolge aufgezeichneten Werte, wobei der Bereich eine Differenz zwischen den maximalen und minimalen Werten der in zeitlicher Reihenfolge aufgezeichneten Werte ist.

9. Kontinuierliches Flüssigkeitstrennverfahren nach Anspruch 8, wobei der Inspektionsströmungsweg für demulgierte Flüssigkeit einen Innendurchmesser von Mikrometergröße oder Millimetergröße aufweist.

10. Kontinuierliches Flüssigkeitstrennverfahren nach Anspruch 8 oder 9, wobei der Inspektionsströmungsweg für membranpermeierte Flüssigkeit einen Innendurchmesser von Mikrometergröße oder Millimetergröße aufweist.

11. Kontinuierliches Flüssigkeitstrennverfahren nach einem der Ansprüche 8 bis 10, ferner umfassend
Messen von optischen Eigenschaften der nicht membranpermeierten Flüssigkeit, die in einem Inspektionsströmungsweg für nicht membranpermeierte Flüssigkeit strömt,
Aufzeichnen von Messwerten der optischen Eigenschaften der nicht membranpermeierten Flüssigkeit in zeitlicher Reihenfolge.

12. Kontinuierliches Flüssigkeitstrennverfahren nach Anspruch 11, wobei der Inspektionsströmungsweg für nicht membranpermeierte Flüssigkeit einen Innendurchmesser von Mikrometergröße oder Millimetergröße aufweist.

13. Kontinuierliches Flüssig-Flüssig-Extraktionsverfahren, umfassend
Kombinieren einer hydrophilen Lösung und einer hydrophoben Lösung, um eine Emulsion zu erhalten, die aus der hydrophilen flüssigen Phase und der hydrophoben flüssigen Phase zusammengesetzt ist, und
Durchführen des kontinuierlichen Flüssigkeitstrennverfahrens nach einem der Ansprüche 8 bis 12.

14. Kontinuierliches Flüssig-Flüssig-Extraktionsverfahren nach Anspruch 13, wobei der Vorgang zum Erhalten der Emulsion umfasst
Durchführen eines kontinuierlichen Flüssigkeits-Flüssigkeits-Kontaktverfahrens umfassend
Kontinuierliches Zuführen einer heterogenen Flüssigkeit, die durch Kombinieren der hydrophilen Lösung und der hydrophoben Lösung erhalten wird, zu einem Gefäß vom Schlaufenrohrtyp mit einem Zirkulationsströmungsweg mit einem Innendurchmesser von Mikrometergröße oder Millimetergröße über einen Zufuhrströmungsweg für heterogene Flüssigkeit,
Strömen der zugeführten Flüssigkeit in dem Zirkulationsströmungsweg mit einer Flussrate, die einen turbulenten Zustand in einem Bereich von einem Verbindungsabschnitt des Zufuhrströmungsweg für heterogene Flüssigkeit und des Zirkulationsströmungswegs zu einem Verbindungsabschnitt eines Emulsionsauslass-Strömungswegs und des Zirkulationsströmungswegs ergibt, und
Kontinuierliches Auslassen der zirkulierten Flüssigkeit aus dem Gefäß vom Schlaufenrohrtyp durch den Emulsionsauslass-Strömungsweg mit einer Strömungsgeschwindigkeit, die der Massenbilanz genügt.

## Revendications

1. Appareil de séparation continue de liquide, comprenant
un dispositif de désémulsification conçu pour désémulsifier une émulsion composée d'une phase liquide hydrophile et d'une phase liquide hydrophobe,
une voie de fourniture de liquide désémulsifié conçue pour fournir un liquide désémulsifié évacué du dispositif de désémulsification à un dispositif de séparation membranaire,
le dispositif de séparation membranaire conçu pour séparer le liquide désémulsifié en un liquide ayant perméé à travers la membrane et un liquide n'ayant pas perméé à travers la membrane,
une voie d'évacuation de liquide ayant perméé à travers la membrane conçue pour évacuer le liquide ayant perméé à travers la membrane du dispositif de séparation membranaire,
une voie d'évacuation de liquide n'ayant pas perméé à travers la membrane conçue pour évacuer le liquide n'ayant pas perméé à travers la membrane du dispositif de séparation membranaire,
un instrument conçu pour mesurer des propriétés optiques du liquide désémulsifié,
un instrument conçu pour mesurer des propriétés optiques du liquide ayant perméé à travers la membrane,
un dispositif de stockage conçu pour enregistrer des valeurs mesurées des propriétés optiques du liquide désémulsifié et des valeurs mesurées des propriétés optiques du liquide ayant perméé à travers la membrane en séries temporelles, et un dispositif de diagnostic conçu pour diagnostiquer le dispositif de désémulsification ou le dispositif de séparation membranaire en se basant sur une plage, un coefficient de variance ou un écart type des valeurs de séries temporelles enregistrées, la plage étant une différence entre les valeurs maximale et minimale des valeurs de séries temporelles enregistrées.

2. Appareil de séparation continue de liquide selon la revendication 1, dans lequel l'instrument conçu pour mesurer des propriétés optiques du liquide désémulsifié comprend une voie d'inspection de liquide désémulsifié ayant un diamètre intérieur de taille micrométrique ou de taille millimétrique.

3. Appareil de séparation continue de liquide selon la revendication 1 ou 2, dans lequel l'instrument conçu pour mesurer des propriétés optiques du liquide ayant perméé à travers la membrane comprend une voie d'inspection de liquide ayant perméé à travers la membrane ayant un diamètre intérieur de taille micrométrique ou de taille millimétrique.

4. Appareil de séparation continue de liquide selon l'une quelconque des revendications 1 à 3, comprenant en outre
un instrument conçu pour mesurer des propriétés optiques du liquide n'ayant pas perméé à travers la membrane,
le dispositif de stockage étant en outre conçu pour enregistrer des valeurs mesurées des propriétés optiques du liquide n'ayant pas perméé à travers la membrane en séries temporelles.

5. Appareil de séparation continue de liquide selon la revendication 4, dans lequel l'instrument conçu pour mesurer des propriétés optiques du liquide n'ayant pas perméé à travers la membrane comprend une voie d'inspection de liquide n'ayant pas perméé à travers la membrane ayant un diamètre intérieur de taille micrométrique ou de taille millimétrique.

6. Appareil d'extraction liquide-liquide continue, comprenant
un dispositif de préparation d'émulsion conçu pour combiner une solution hydrophile et une solution hydrophobe afin d'obtenir l'émulsion composée de la phase liquide hydrophile et de la phase liquide hydrophobe, et l'appareil de séparation continue de liquide décrit dans l'une quelconque des revendications 1 à 5.

7. Appareil d'extraction liquide-liquide continue selon la revendication 6, dans lequel
le dispositif de préparation d'émulsion est un appareil de contact liquide-liquide continu comprenant
une cuve de type tube en boucle avec une voie de circulation ayant un diamètre intérieur de taille micrométrique ou de taille millimétrique,
une voie de fourniture de liquide hétérogène conçue pour fournir en continu un liquide hétérogène composé d'une combinaison de la solution hydrophile et de la solution hydrophobe à un débit de 0,01 à 500 cm³/min à la cuve de type tube en boucle, la voie de fourniture de liquide hétérogène étant raccordée à la voie de circulation,
une pompe volumétrique conçue pour faire s'écouler le liquide fourni dans la voie de circulation à un débit permettant d'être en condition turbulente dans une région allant d'une partie de raccordement entre la voie de fourniture de liquide hétérogène et la voie de circulation à une partie de raccordement entre une voie d'évacuation d'émulsion et la voie de circulation, et
une voie d'évacuation d'émulsion conçue pour évacuer en continu le liquide mis en circulation de la cuve de type tube en boucle à un débit qui satisfait le bilan massique, la voie d'évacuation d'émulsion étant raccordée à la voie de circulation.

8. Procédé de séparation continue de liquide, comprenant
la désémulsification d'une émulsion composée d'une phase liquide hydrophile et d'une phase liquide hydrophobe pour obtenir un liquide désémulsifié,
la mesure de propriétés optiques du liquide désémulsifié s'écoulant dans une voie d'inspection de liquide désémulsifié,
la séparation du liquide désémulsifié en un liquide ayant perméé à travers la membrane et un liquide n'ayant pas perméé à travers la membrane,
la mesure de propriétés optiques du liquide ayant perméé à travers la membrane s'écoulant dans une voie d'inspection de liquide ayant perméé à travers la membrane,
l'enregistrement de valeurs mesurées des propriétés optiques du liquide désémulsifié et de valeurs mesurées des propriétés optiques du liquide ayant perméé à travers la membrane en séries temporelles, et
le diagnostic de l'état de désémulsification ou de séparation membranaire sur la base d'une plage, d'un coefficient de variance ou d'un écart type des valeurs de séries temporelles enregistrées, la plage étant une différence entre les valeurs maximale et minimale des valeurs de séries temporelles enregistrées.

9. Procédé de séparation continue de liquide selon la revendication 8, dans lequel la voie d'inspection de liquide désémulsifié a un diamètre intérieur de taille micrométrique ou de taille millimétrique.

10. Procédé de séparation continue de liquide selon la revendication 8 ou 9, dans lequel la voie d'inspection de liquide ayant perméé à travers la membrane a un diamètre intérieur de taille micrométrique ou de taille millimétrique.

11. Procédé de séparation continue de liquide selon l'une quelconque des revendications 8 à 10, comprenant en outre
la mesure de propriétés optiques du liquide n'ayant pas perméé à travers la membrane s'écoulant dans une voie d'inspection de liquide n'ayant pas perméé à travers la membrane,
l'enregistrement de valeurs mesurées des propriétés optiques du liquide n'ayant pas perméé à travers la membrane en séries temporelles.

12. Procédé de séparation continue de liquide selon la revendication 11, dans lequel la voie d'inspection de liquide n'ayant pas perméé à travers la membrane a un diamètre intérieur de taille micrométrique ou de taille millimétrique.

13. Procédé d'extraction liquide-liquide continue comprenant
la combinaison d'une solution hydrophile et d'une solution hydrophobe pour obtenir une émulsion composée de la phase liquide hydrophile et de la phase liquide hydrophobe, et
la réalisation du procédé de séparation continue de liquide décrit dans l'une quelconque des revendications 8 à 12.

14. Procédé d'extraction liquide-liquide continue selon la revendication 13, dans lequel les opérations permettant d'obtenir l'émulsion comprennent
la réalisation d'un procédé de mise en contact liquide-liquide continue comprenant
la fourniture continue d'un liquide hétérogène obtenu par combinaison de la solution hydrophile et de la solution hydrophobe à une cuve de type tube en boucle avec une voie de circulation ayant un diamètre intérieur de taille micrométrique ou de taille millimétrique par le biais d'une voie de fourniture de liquide hétérogène,
l'écoulement du liquide fourni dans la voie de circulation à un débit permettant d'être en condition turbulente dans une région allant d'une partie de raccordement entre la voie de fourniture de liquide hétérogène et la voie de circulation à une partie de raccordement entre une voie d'évacuation d'émulsion et la voie de circulation, et
l'évacuation continue du liquide mis en circulation de la cuve de type tube en boucle par la voie d'évacuation d'émulsion à un débit qui satisfait le bilan massique.
